# EUROPÄISCHE PATENTSCHRIFT

(11) **EP 1 772 687 B1**
(45) Veröffentlichungstag und Bekanntmachung des Hinweises auf die Patenterteilung: **02.03.2011**
(21) Anmeldenummer: 06021013.5
(22) Anmeldetag: 06.10.2006
(51) Int. Cl.: F25B 27/00, F03G 6/06

(54) **Klimagerät und Verfahren zur Klimatisierung eines Raumes**
Device and method for air conditioning of a room
Dispositif et procédé de climatisation d'une pièce

(30) Priorität: 06.10.2005 DE 102005048125
(43) Veröffentlichungstag der Anmeldung: 11.04.2007
(73) Patentinhaber: Stadtwerke Mainz AG, 55118 Mainz (DE)
(72) Erfinder: Flohr, Peter, Dipl.-Ing., 55128 Mainz (DE); Schmidt, Jürgen, Dipl.-Ing., 55599 Wonsheim (DE)
(74) Vertreter: Graf Glück Habersack Kritzenberger

(56) Entgegenhaltungen:
- AT-B- 385 112
- DE-A1- 2 719 995
- DE-A1- 4 322 848
- DE-A1- 10 028 543
- US-A- 4 831 830
- US-A- 5 685 152
- US-A1- 2004 011 069
- US-A1- 2004 055 313
- US-B1- 6 775 982

## Beschreibung

Die vorliegende Erfindung betrifft ein Klimagerät und Verfahren zur Kühlung eines oder mehrer Räume gemäß Ansprüche 1 und 7. Der Raum kann in einem Gebäude oder in einem Fahrzeug, z. B. in einem Kraftfahrzeug oder einem Wohnwagen angeordnet sein.

Es ist bekannt, für die Klimatisierung von Räumen, Kompressor oder Absorber-Kühlkreisläufe vorzusehen, wobei Kompressor-Kühlkreisläufe eher aufgrund ihres besseren Wirkungsgrades und Absorber-Kreisläufe aufgrund ihrer Lautlosigkeit verwendet werden. In der Regel werden derartige Kühlkreisläufe durch Elektromotoren betätigt wodurch ein relativ großer Energiebedarf resultiert. Berücksichtigt man zusätzlich in einer volkswirtschaftlichen Betrachtung den Wirkungsgrad des Kraftwerks bei der Erzeugung elektrischen Stroms so kommt man auf einen vergleichsweise schlechten Gesamtwirkungsgrad, was dazu führt, das die Umwelt durch schlechte Ressourcennutzung übermäßig belastet wird. Zudem erfordern derartige Klimaanlagen immer eine entsprechende - zumindest elektrische - Infrastruktur des Raumes. Ein Betrieb in Kraftfahrzeugen oder Wohnwägen ist daher schwierig zu realisieren.

Die US 6,775,982 zeigt einen Stirlingmotor, der mit dem Kompressor eines Kühlkreislaufes verbunden ist als auch mit einem elektrischen Generator. Wenn kein Kühlung erfordlerlich ist, kann die Energie des Motors dazu verwendet werden, Strom zu erzeugen.

Es ist Aufgabe der Erfindung, ein Klimagerät für Räume zu schaffen, das autark von einer elektrischen Energieversorgung ist und einen guten Wirkungsgrad wie auch eine hohe Gesamteffizienz aufweist.

Erfindungsgemäß zum Betrieb eines Kühlkreislaufs für die Kühlung des Raumes die Wärme der Sonnenstrahlung zum Betrieb des Kühlkreislaufs genutzt. Auf diese Weise wird eine volkswirtschaftlich sehr gute Energieausnutzung erreicht.

Die Erfindung ist somit sehr vorteilhaft unter gesamtenergetischer Betrachtungsweise unter Berücksichtigung eines unterstellten Nutzerverhaltens im Einflußberreich der erneuerbaren Energien. Ausgangspunkt ist der derzeit höchst geförderte Solarstrom. Da die Netzrückspeisung und die konventionelle Kälteerzeugung unabhängig erfolgen, bedeutet dies bei der Betrachtung des Gesamtprozesses unabgeglichene Einspeisung mit derzeit 0,54 €/kWh und Entnahme mit durchschnittlich 0,20 €/kWh aus dem vorgelagerten Stromnetz mit den jeweiligen systembedingten Verlusten. Unter diesen Voraussetzungen beruht der wesentliche Effizienzsteigerungseffekt der Erfindung auf dem Umstand, dass Sonneneinstrahlung und Kältebedarf direkt voneinander abhängen. Durch die direkte Prozesskopplung können die energieineffizienten Ein- und Ausspeisungen vermieden werden. Die bisherige Erfahrung im Bereich der erneuerbaren Energien bei Privathaushalten zeigt, dass der Netto-Strombezug aus dem Netz nicht merklich gesunken ist. Als Grund wird vermutet, dass sich das Vebraucherverhalten durch das Vorhandensein "kostenloser" Energie verändert, durch Zukauf und Einsatz elektrischer Geräte wie z.B. Klimaanlagen. Die Erfindung leistet hier durch die automatische Kopplung beider Prozesse einen Beitrag zur Energieeinsparung.

In der Erfindung wird die Wärme über einen Stirlingmotor, als mechanische Energie dem Kompressor eines Kompressorkältekreislaufs zugeführt. So lässt sich eine einfache zu installierende und zu wartende Kühleinrichtung für den Raum unter Verwendung standardisierter Komponenten realisieren.

Das Klimagerät der Erfindung hat eine Spiegelanordnung und einem Stirlingmotor. Die Spiegelanordnung steht außerhalb des Raumes, z.B. im Freien oder in einer sonnendurchfluteten Stelle im Innenraum oder an der Außenfassade eines Gebäudes und lenkt Sonnenstrahlen auf die Heiß-Seite des Stirlingmotors. Der Stirlingmotor hat eine Abtriebswelle die über eine Kraftübertragungseinrichtung, im einfachsten Fall eine Welle, mit dem Kompressor eines Kompressor-Kühlkreislaufes verbunden ist. Der Verdampfer des Kühlkreislaufs ist in dem zu kühlenden Raum angeordnet, wodurch eine Raumkühlung erreicht wird. Der Vorteil der Erfindung besteht darin, dass die Primärenergie "Wärme" direkt über den Stirlingmotor in mechanische Energie für den Antrieb des Kompressors umgewandelt wird, was einen vergleichsweise hohen Wirkungsgrad mit sich bringt und zudem die Unabhängigkeit von einer externen, z. B. elektrischen, Energieversorgung.

Die Kraftübertragungseinrichtung zwischen dem Stirlingmotor und dem Kompressor kann, wie bereits ausgeführt, im einfachsten Falle als eine Welle ausgebildet sein. Es ist jedoch vorteilhaft, wenn in der Kraftübertragungseinrichtung eine Schwungmasse vorgesehen ist, um eine gleichmäßigere ruckfreie Drehung der Abtriebswelle zu erreichen. Weiterhin ist es vorteilhaft, in der Kraftübertragungseinrichtung ein Getriebe vorzusehen, um die Drehzahl der Abtriebswelle an die optimale Drehzahl für den Kompressor anzupassen. Auf diese Weise wird ein guter Wirkungsgrad des Kompressors sichergestellt.

Die Kraftübertragungseinrichtung eignet sich hervorragend, um eine elektrische Hilfsversorgung, z. B. einen Dynamo einzukoppeln, die den Versorgungsstrom für Ventilatoren zur Verfügung stellt, die in dem Kompressor-Kühlkreislauf im Zusammenhang mit dem Kondensator und/oder dem Verdampfer Verwendung finden.

Ein derartiges System ist geeignet, ohne externe Energieversorgung für die Ventilatoren die Kühlleistung des Kühlkreislaufs zu erhöhen. Vorzugsweise ist es vorgesehen, dass der in dem Raum in Verbindung mit dem Verdampfer vorgesehene Ventilator thermostatgesteuert ist, so dass er entsprechend den herrschenden Temperaturbedingungen im Raum automatisch ein- und ausgeschaltet wird.

Vorzugsweise ist ebenfalls eine Fliehkraftkupplung in der Kraftübertragungseinrichtung angeordnet. Durch diese Fliehkraftkupplung kann erreicht werden, dass die Ankopplung des Kompressors an den Stirlingmotor erst dann einsetzt, wenn der Stirlingmotor eine gewisse Mindestdrehzahl erreicht hat. Auf diese Weise wird unterbunden, dass der Stirlingmotor bereits beim Anlaufen durch den Kompressor belastet wird, was das Hochlaufen des Stirlingmotors erschweren oder gar verhindern kann.

Vorzugsweise ist die Spiegelanordnung zum Umlenken der Sonnenstrahlen auf die Heiß-Seite des Stirlingmotors als Parabolspiegel ausgebildet, der vorzugsweise mit dem Stirlingmotor in einer festen Verbindung montiert ist, ähnlich einer Satellitenschüssel. Eine derartige Anordnung ist zum einen kompakt und bewirkt eine gute Bündelung der Sonnenstrahlung auf der Heiß-Seite des Stirlingmotors, so dass Temperaturen bis 3000 °C erreichbar sind. Wenn diese Anordnung vorzugsweise noch automatisch dem Sonnenstand nachfahrbar ist, durch eine entsprechende an sich bekannte Nachführungsvorrichtung, kann immer das Optimum aus der gerade herrschenden Sonneneinstrahlung umgesetzt werden.

Eine derartige Anordnung bestehend aus Parabolantenne und angekoppelten Stirlingmotor lässt sich problemlos im Garten auf einem Balkon oder an einer Fassade bzw. auf dem Hausdach installieren. Im Falle von Wohnwägen bietet sich eine Montage auf dem Dach an, welche jedoch abnehmbar erfolgen sollte, so dass die Energiegewinnungsanordnung aus Parabolspiegel und Stirlingmotor während der Fahrt nicht behindert.

Selbstverständlich ist es möglich, eine Spiegelanordnung zu verwenden, die die Sonneneinstrahlung nicht direkt auf die Heiß-Seite des Stirlingmotors richtet, sondern auf einen Wärmeträger, z. B. eine Heizkammer für ein wärmeübertragendes Fluid, welches zur heißen Seite des Stirlingmotors zirkuliert. Auf diese Weise können beispielsweise beliebige Spiegelanordnungen verwendet werden, die geometrisch nicht durch die Geometrie des Stirlingmotors beschränkt sind. So lassen sich z. B. längsverlaufende Schläuche anordnen, die von länglichen Parabolspiegeln umgeben sind, welche das Sonnenlicht auf die Schläuche fokussieren. Das Wärmemedium, z. B. Wasser kann mittels Pumpe oder herkömmlicher Konvektion zu der Heiß-Seite des Stirlingmotors zirkulieren. Die Heiß-Seite des Stirlingmotors kann zudem durch Wärmeleitbleche vergrößert sein, so dass die Hitze von den Spiegeln oder von dem Wärmemedium besser an die Heiß-Seite des Stirlingmotors weitergeleitet wird.

Es wird in der Anmeldung aus Gründen der Klarheit nicht erwähnt, sollte jedoch für den Fachmann selbstverständlich sein, dass alle Komponenten des Klimagerätes in einfacher oder mehrfacher Ausführung vorhanden sein können, wie z. B. mehrere Spiegel, mehrere Stirlingmotoren, mehrere Kompressoren bzw. mehrere Verdampfer und Kondensatoren des Kühlkreislaufes. Es ist weiterhin für den Fachmann selbstverständlich, dass der Kühlkreislauf alle an sich bekannten Komponenten wie Drosseln, Ventile etc. aufweist. Diese Komponenten sind an sich bekannt und werden hier nicht näher erläutert. Die eventuell erforderliche Hilfsenergie für Ventile und weitere Steuerelemente wird, da per se bekannt, nicht weiter beschrieben. Sie können z.B. hydraulisch über Kapillaren, thermomechanisch oder auch elektrisch betrieben werden. In diesem Falle erfolgt die Hilfsenergieversorgung vorzugsweise ebenfalls vom Generator. Spannungsart und -höhe ergeben sich dann aus der Systemoptimierung, vorzugsweise als Kleinspannung.

Die Erfindung wird nachfolgend beispielsweise anhand der schematischen Zeichnungen beschrieben. In diesen zeigen:
- Fig. 1: eine Schemaansicht eines Klimageräts mit Parabolspiegel, Stirlingmotor und Kom- pressor-Kühlkreislauf gemäß Erfindung, und
- Fig. 2: eine Schemaansicht eines Klimageräts mit Parabolspiegel und Diffusionsabsorptions- Kühlkreislauf, das nicht zur Erfindung gehört.

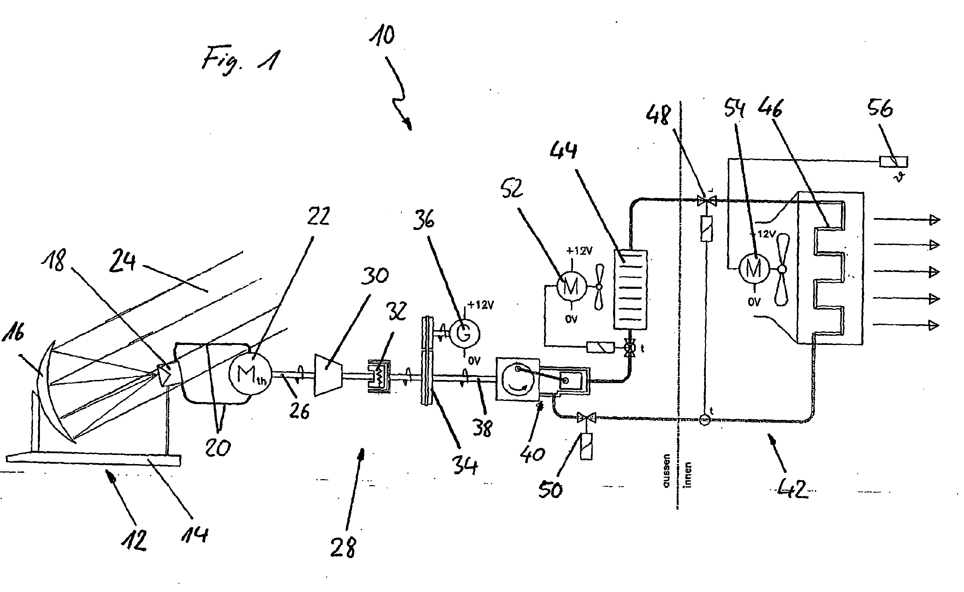

Figur 1 zeigt ein Klimagerät 10 umfassend eine Sonnenkollektoreinrichtung 12 mit einem Ständer 14, der einen Parabolspiegel 16 und eine im Brennpunkt des Parabolspiegels 16 liegende Heizkammer 18 trägt, die über einen Wärmefluidkreislauf 20 mit der heißen Seite eines Stirlingmotors 22 verbunden ist. Anstelle der Übertragung mittels eines Wärmeträgermediums kann auch direkt die Heiß-Seite des Stirlingmotors im Brennpunkt des Parabolspiegels 16 angeordnet sein. Die Antriebswelle 26 des Stirlingmotors ist mit einer Kraftübertragungseinrichtung 28 verbunden, die eine Schwungmasse und ein Getriebe 30, eine dem Getriebe nachgeordnete Fliehkraftkupplung 32 und eine Ankoppelvorrichtung 34 für einen Generator 36 umfasst. Die Kraftübertragungseinrichtung 28 endet abtriebsseitig in einer Welle 38, die mit dem Kompressor 40 eines Kompressor-Kühlkreislauf 42 verbunden ist. Der Kühlkreislauf dient zur Kühlung eines Raumes, der rechts der gestrichelten Linie mit "innen" bezeichnet ist. Die außerhalb des Raumes angeordneten Komponenten sind links der senkrechten gestrichelten Linie angeordnet, welche Seite mit "außen" bezeichnet ist. Der Kühlkreislauf 42 umfasst als Hauptkomponenten einen Kondensator 44, der außerhalb des Raumes angeordnet ist und einen Verdampfer 46, welcher innerhalb des Raumes zur Kühlung des selben vorgesehen ist. Zusätzlich ist zwischen dem Kondensator 44 und dem Verdampfer 46 ein Expansionsventil 48 vorgesehen, als auch ein Dekompressionsventil 50 zwischen dem Verdampfer 46 und dem Kompressor 40. Der Kondensator 44 ist mit einem Elektroventilator 52 versehen, der über die vom Generator 36 erzeugte Spannung betreibbar ist. Auch der innerhalb des Raumes angeordnete Verdampfer 46 ist mit einem Elektroventilator 54 versehen, der ebenfalls über den Generator 36 gespeist und über einen Raumthermostat 56 steuerbar ist.

Das Klimagerät arbeitet wie folgt. Die Sonnenstrahlung 24 fällt auf den Parabolspiegel 16 und wird von dort auf die Heizkammer 18 des Sonnenkollektors 12 fokussiert. In der Heizkammer 18 wird ein Wärmefluid, z.B. Wasser oder ein anderer an sich bekannter Wärmeträger, welches in dem Wärmefluidkreislauf 20 zirkuliert, der Heiß-Seite des Stirlingmotors 22 zugeleitet. Der Stirlingmotor setzt sich daraufhin in Bewegung, was zu einer Rotation der Abtriebswelle 26 führt. Über die Schwungmasse des Getriebes 30 wird zum einen eine gleichmäßige Rotation als auch eine Drehzahlanpassung an die optimalen Arbeitbedingungen des Kompressors 40 sichergestellt. Die der Schwungmasse bzw. dem Getriebe 30 nachgeordnete Fliehkraftkupplung 32 sorgt dafür, dass sobald der Stirlingmotor 22 eine gewisse Mindestdrehzahl erreicht hat, die Abtriebswelle 38 der Kraftübertragungseinrichtung 28 mit der Abtriebswelle des Stirlingmotors gekoppelt wird, wodurch der Kompressor 40 in Betrieb gesetzt wird. Durch diese Fliehkraft gesteuerte Ankopplung wird sichergestellt, dass die Abtriebswelle des Stirlingmotors 22 erst dann mit dem Kompressor 40 verbunden wird, wenn der Stirlingmotor genug Drehzahl und Drehmoment an seiner Abtriebswelle aufweist, um den Kompressor auch betätigen zu können. Über die Ankopplung 34 wird der Generator 36 betrieben, welcher die Ventilatoren 52 und 54 des Kondensators und des Verdampfers speist, welche Ventilatoren die Wirkung des Kühlsystems erhöhen können. Durch den direkten Abgriff der Energie von der Abtriebswelle 38 der Kraftübertragungseinrichtung 28 wird das Vorsehen einer externen Energiequellen für die Ventilatoren vermieden. Über die Tätigkeit des Kompressors 40, des Kondensators 44 und des Verdampfers 46, gegebenenfalls unter zusätzlicher Zuschaltung der entsprechenden Ventilatoren 52 und 54 wird in an sich bekannter Weise eine Kühlung des Raumes im Rahmen eines herkömmlichen Kompressor-Kühlkreislaufes erzielt. Der Ventilator 54 des Verdampfers 46 ist hierbei über einen Raumthermostaten 56 gesteuert, der dafür sorgt, dass der Ventilator 54 zugeschaltet wird, wenn eine gewisse obere Grenztemperatur überschritten wird, und ausgeschaltet wird, wenn eine gewisse Mindesttemperatur unterschritten wird. Dies sorgt dafür, dass der Raum automatisch innerhalb eines gewissen Temperaturintervalls gesteuert wird.

Die oben genannte Vorrichtung kann für feste Räume in Gebäuden aber auch für mobile Räume in Kraftfahrzeugen oder Wohnwägen verwendet werden. Da keine zusätzliche Energieversorgung nötig ist, ist die Anlage autark von jeglicher Infrastruktur und ist somit auch z. B. in Berghütten etc. einsetzbar, in denen genau diese Infrastruktur fehlt.

Statt der Zuleitung der Wärme über einen Wärmefluidkreislauf 20 kann die Heiß-Seite des Stirlingmotors 22 auch direkt im Brennpunkt des Parabolspiegels 16 angeordnet sein, in welchen Fall sich dann der eingangsseitige Wärmefluidkreislauf erübrigt. Der Wärmefluidkreislauf hat jedoch den Vorteil, dass die Heizkammer in beliebiger geometrischer Form gestaltet werden kann, z. B. in Form von langen mäanderförmigen Rohren, welche dann von entsprechenden länglichen Parabolspiegeln umgeben sein können. Auf diese Weise kann die Form der Spiegel, d. h. des gesamten Solarkollektors 12 z. B. an einer gegebenen Dachform eines Hauses oder Wohnwagens angepasst werden.

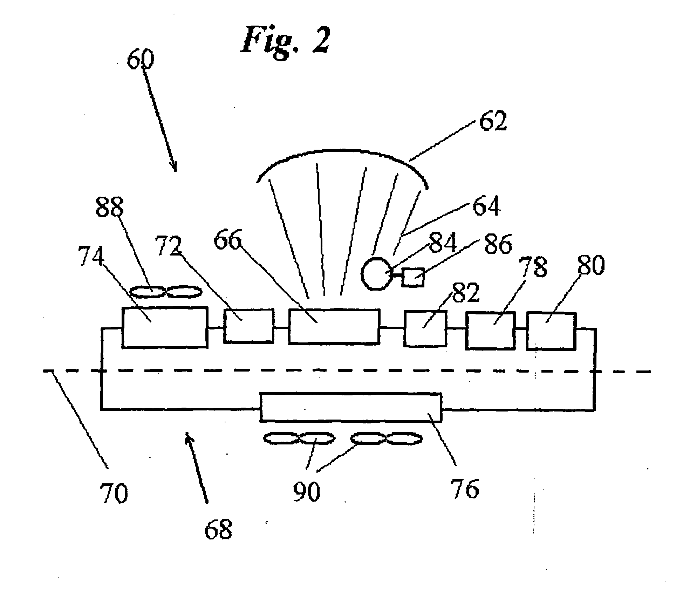

Das Beispiel in Fig. 2 gehört nicht zur Erfindung und zeigt ein Kühlgerät 60 mit einem Parabolspiegel 62, um Sonnenstrahlen 64 auf einen Austreiber 66 eines Diffusionsabsorptionskühlkreislaufes 68 zu leiten. Die in der Figur oberhalb der gestrichelten Linie 70 angeordneten Komponenten sind dabei ausserhalb des Raums angeordnet, die darunter liegenden Komponenten innerhalb des zu kühlenden Raumes.

Der Diffusionsabsorptionskreislauf 68 wird mit einer hochkonzentrierten Ammoniak-Wasser-Gemisch. Im Austreiber 66 (auch Kocher genannt) werden Ammoniak und Wasser durch die Wärmezufuhr der Sonnenstrahlen 64 getrennt. Dabei entweicht ein Teil des Ammoniaks aus der Lösung. Es verbleibt eine niedrig konzentrierte Ammoniak-Wasser-Mischung. Das Ammoniak strömt dann in den Entfeuchter 72, wo der im Austreiber 66 ebenfalls entstehende Wasserdampf durch Kondensation entfernt wird. Im Kreislauf verbleibt Ammoniakdampf, welcher nun von dem Entfeuchter 72 in den Kondensator 74 gelangt. Im Kondensator 74 verflüssigt sich der Ammoniakdampf, und Wärme wird nach außen abgeführt, wobei ein Teil des im Austreiber 66 erzeugten Drucks bestehen bleibt. Das flüssige Ammoniak gelangt in den Verdampfer 76, an welchem die eigentliche Kühlung des Raumes stattfindet. In dem Verdampfer wird das flüssige Ammoniak einem aus einem Absorber 78 stammenden niedrigkonzentrierten Ammoniak-Helium-Gemisch zugeführt, wobei ein hochkonzentriertes Ammoniak-Helium-Gemisch entsteht. Danach erfolgt unter Aufnahme von Wärme eine Verdampfung und Expansion des Ammoniak aus dem Ammoniak-Helium-Gemisch heraus. Dieses hochkonzentrierte Ammoniak-Helium-Gemisch strömt nun von dem Verdampfer 76 über einen Gas-Wärmetauscher 80 in den Absorber 78. Hier wird das Ammoniak von dem aus dem Austreiber 66 zurückströmenden niedrig konzentrierten Ammoniak-Wasser-Gemisch absorbiert. Es verbleibt ein niedrig konzentriertes Ammoniak-Helium-Gemisch, welches vom Absorber 78 über den Gas-Wärmetauscher 80 zum Verdampfer 76 zurückgeführt wird. Die hochkonzentrierte Ammoniak-Wasser-Mischung kommt jetzt über einen Lösungsmittel-Wärmetauscher 82 wieder in den Austreiber 88. In dem Strahlengang des Parabolspiegels 62 ist ein kleiner Stirling-Motor 84 angeordnet, der mittels der eingestrahlten Wärme angetrieben wird. An seiner Abtriebswelle treibt der Stirling-Motor 84 einen Generator 86 an, der Strom für Ventilatoren 88, 90 für den Kondensator 74 und den Verdampfer 76 bereit stellt. Die Ventilatoren 90 für den Verdampfer 76 können wie in Fig. 1 durch einen Raumthermostaten gesteuert sein. Mittels des durch den Generator 86 erzeugten Strom kann auch noch eine im Kreislauf 68 vorgesehene Pumpe (nicht dargestellt) angetrieben werden. Diese Ausführungsform ist daher wie in Fig. 1 autark, d.h. unabhängig von jeglicher externen Energieversorgung.

Statt die Sonnenstrahlen 64 direkt auf den Austreiber 66 zu leiten kann dei Spiegelanordnung 62 die Strahlen 64 auch auf eine Heizkammer eines Wärmeübertragungskreislaufs leiten, welcher mit dem Austreiber 66 verbunden ist.

Alle einzelnen Komponenten des Klimagerätes können singulär oder mehrfach vorgesehen sein, je nachdem wie es die Gesamtkonzeption der Anlage erfordert.

Es soll zudem klargestellt sein, dass die Ausführungsbeispiele nicht als beschränkend für die Erfindung zu betrachten sind, die innerhalb des Schutzbereichs der nachfolgenden Ansprüche beliebig modifizierbar ist.

## Patentansprüche

1. Klimagerät zur Kühlung wenigstens eines Raumes,
umfassend
einen Stirlingmotor (22),
eine Spiegelanordnung, die Sonnenstrahlung auf die Heiß-Seite oder auf ein Wärmeübertragungsmedium (20) zur Erhitzung der Heiß-Seite des Stirling-Motors richtet, einen Kompressor (40), der Bestandteil eines Kompressor-Kühlkreislaufes (42) ist, durchs welchen der Raum mittels eines Verdampfers (46) des Kühlkreislaufes gekühlt wird,
eine Kraftübertragungseinrichtung (28) zwischen dem Stirlingmotor und dem Kompressor, den Kompressor-Kühlkreislauf (42), umfassend den Kompressor (40), einen außerhalb des Raumes angeordneten Kondensator (44) und den in dem Raum angeordneten Verdampfer (46), wobei an die Kraftübertragungseinrichtung (28) eine Stromerzeugungseinrichtung (36) angekoppelt (34) ist, welche Ventilatoren (52, 54) für den Kondensator (44) und/oder den Verdampfer (46) versorgt.

2. Klimagerät nach Anspruch 1,
**dadurch gekennzeichnet, dass** in der Kraftübertragungseinrichtung (28) eine Fliehkraftkupplung (32) angeordnet ist.

3. Klimagerät nach einem der Ansprüche 1 bis 2, **dadurch gekennzeichnet, dass** die Spiegelanordnung (16) als Parabolspiegel ausgebildet ist.

4. Klimagerät nach einem der Ansprüche 1 bis 3, **dadurch gekennzeichnet, dass** in der Kraftübertragungseinrichtung (28) ein Getriebe (30) angeordnet ist.

5. Klimagerät nach einem der Ansprüche 1 bis 4, **dadurch gekennzeichnet, dass** in der Kraftübertragungseinrichtung (28) eine Schwungmasse eingekoppelt ist.

6. Klimagerät nach einem der Ansprüche 1 bis 5, **dadurch gekennzeichnet, dass** ein Ventilator (54) für den Verdampfer (46) über einen Raumthermostaten (56) gesteuert ist.

7. Verfahren zur Klimatisierung eines Raumes, bei welchem
- mittels einer das Sonnenlicht fokussierenden Spiegelanordnung (16) die Heiß-Seite eines Stirling-Motors (22) erhitzt wird
- über eine mit der Abtriebswelle (26) des Stirlingmotors verbundene Kraftübertragungseinrichtung (28) ein Kompressor (40) betätigt wird, der Bestandteil eines Kompressor-Kühlkreislaufes (42) ist, durch welchen der Raum mittels eines Verdampfers (46) des Kühlkreislaufes gekühlt wird, wobei von dem Stirlingmotor (22) zusätzlich eine Stromerzeugungseinrichtung (36) angetrieben wird, die Strom für Ventilatoren (52, 54) des Kondensators (44) und/oder des Verdampfers (46) liefert.

8. Verfahren nach Anspruch 7, **dadurch gekennzeichnet, dass** der Ventilator (54) für den Verdampfer (46) über einen Raumthermostaten (56) gesteuert wird.

9. Verfahren nach einem der Ansprüche 7 oder 8, **dadurch gekennzeichnet, dass** in der Kraftübertragungseinrichtung (28) eine Fliehkraftkupplung (32) verwendet wird, um eine Koppelung zwischen der Abtriebswelle des Stirlingmotors (22) und dem Kompressor (40) erst dann herzustellen, wenn der Stirlingmotor eine bestimmte Mindestdrehzahl erreicht hat.

## Claims

1. An air-conditioner for cooling at least one room comprising
a Stirling engine (22),
a reflector array directing solar radiation to the hot side or to a heat transfer medium (20) for heating the hot side of said Stirling engine,
a compressor (40) as a component of the compressor cooling circuit (42) by which the room is cooled by means of an evaporator (46) of said cooling circuit,
a power train (28) for transmitting power between the Stirling engine (22) and the compressor (40),
said compressor cooling circuit (42) comprising the compressor (40) a condenser (44) arranged outside of the room and the evaporator (46) arranged inside the room, wherein coupled to said power train (28) is a power generator (36) powering fans (52,54) for the condenser (44) and/or for the evaporator (46).

2. The air-conditioner as set forth in claim 1, **characterized in that** a centrifugal coupling (32) is arranged in said power train (28).

3. The air-conditioner as set forth in claim 1 or claim 2, **characterized in that** said reflector array (16) is configured parabolic.

4. The air-conditioner as set forth in any of the claims 1 to 3, **characterized in that** a gearbox (30) is arranged in said power train (28).

5. The air-conditioner as set forth in any of the claims 1 to 4, **characterized in that** a flyweight is coupled to said power train (28).

6. The air-conditioner as set forth in any of the claims 1 to 5, **characterized in that** a fan (54) for the evaporator (46) is controlled via a room thermostat (56).

7. A method for air-conditioning a room wherein
- by means of a reflector array (16) focussing the solar radiation the hot side of a Stirling engine (22) is heated,
- via a power train (28) connected to the output shaft (26) of the Stirling engine (22) a compressor (40) is actuated as a component of the compressor cooling circuit (42) by which the room is cooled by means of an evaporator (46) of the cooling circuit, said Stirling engine (22) additionally powering a power generator (36) furnishing current to power the fans (52, 54) of the condenser (44) and/or of the evaporator (46).

8. The method as set forth in claim 7, **characterized in that** said fan (54) for the evaporator (46) is controlled via a room thermostat (56).

9. The method as set forth in claim 7 or claim 8, **characterized in that** used in said power train (28) is a centrifugal coupling (32) to couple the output shaft of the Stirling engine (22) to the compressor (40) not before said Stirling engine has attained a certain minimum speed.

## Revendications

1. Dispositif de climatisation destiné au refroidissement d'au moins une pièce, comprenant :
un moteur Stirling (22),
un ensemble miroir qui oriente le rayonnement solaire sur le côté chaud ou sur un fluide de transfert thermique permettant de réchauffer le côté chaud du moteur Stirling,
un compresseur (40) qui fait partie d'un circuit de refroidissement du compresseur (42), par lequel la pièce est refroidie au moyen d'un évaporateur (46) du circuit de refroidissement,
un dispositif de transmission de force (28) entre le moteur Stirling et le compresseur,
le circuit de refroidissement de compresseur (42), incluant le compresseur (40), un condenseur (44) disposé à l'extérieur de la pièce et l'évaporateur (46) disposé dans la pièce, un dispositif de génération de courant (36) qui alimente des ventilateurs (52, 54) pour le condenseur (44) et/ou l'évaporateur (46) étant accouplé au dispositif de transmission de force (28).

2. Dispositif de climatisation selon la revendication 1, **caractérisé en ce qu'**un embrayage centrifuge (32) est disposé dans le dispositif de transmission de force (28).

3. Dispositif de climatisation selon l'une des revendications 1 à 2, **caractérisé en ce que** l'ensemble miroir (16) est conçu sous la forme d'un miroir parabolique.

4. Dispositif de climatisation selon l'une des revendications 1 à 3, **caractérisé en ce qu'**un mécanisme de transmission (30) est disposé dans le dispositif de transmission de force (28).

5. Dispositif de climatisation selon l'une des revendications 1 à 4, **caractérisé en ce qu'**une masse d'inertie est incorporée dans le dispositif de transmission de force (28).

6. Dispositif de climatisation selon l'une des revendications 1 à 5, **caractérisé en ce qu'**un ventilateur (54) pour l'évaporateur (46) est commandé par un thermostat d'ambiance (56).

7. Procédé de climatisation d'une pièce, dans lequel
- le côté chaud d'un moteur Stirling (22) est réchauffé au moyen d'un ensemble miroir (16) focalisant le rayonnement solaire,
- un dispositif de transmission de force (28) relié à l'arbre de sortie (26) du moteur Stirling active un compresseur (40), qui fait partie du circuit de refroidissement du compresseur (42), par lequel la pièce est refroidie au moyen d'un évaporateur (46) du circuit de refroidissement, le moteur Stirling (22) entraînant également un dispositif de génération de courant (36) qui fournit du courant pour les ventilateurs (52, 54) du condenseur (44) et/ou de l'évaporateur (46).

8. Procédé selon la revendication 7, **caractérisé en ce que** le ventilateur (54) pour l'évaporateur (46) est commandé par un thermostat d'ambiance (56).

9. Procédé selon l'une des revendications 7 ou 8, **caractérisé en ce qu'**un embrayage centrifuge (32) est utilisé dans le dispositif de transmission de force (28), afin d'établir un accouplement entre l'arbre de sortie du moteur Stirling (22) et le compresseur uniquement lorsque le moteur Stirling a atteint un certain régime minimum.
